# EUROPEAN PATENT APPLICATION

(11) **EP 3 970 836 A1**
(43) Date of publication of application: **23.03.2022**
(21) Application number: 21196852.4
(22) Date of filing: 15.09.2021
(51) Int. Cl.: B01D 63/06

(54) **BRANCHED FILTER AND METHOD OF USE**

(30) Priority: 18.09.2020 US 202017025262
(71) Applicant: Pall Corporation, Port Washington, NY 11050 (US)
(72) Inventor: ZEILER, Martin, 55543 Bad Kreuznach (DE); BAIR, James A., Cortland, 13045 (US); MILLER, John P., Cortland, 13045 (US)
(74) Representative: Hoeger, Stellrecht & Partner Patentanwälte mbB

(57) **Abstract**

Filter arrangements comprising a plurality of radially arranged filters, each filter comprising a plurality of arms, each arm comprising a hollow tube having porous side wall, each hollow tube having an open first end and an open second end, and a tube inner fluid channel having an inner diameter; the filter further including a first tube connector, comprising a first hollow body having porous side walls and a first hollow body inner diameter, connected to, and in fluid communication with, the hollow tubes, and a second tube connector, comprising a second hollow body having a second hollow body inner diameter, connected to, and in fluid communication with, the first hollow body, and filter devices including filter arrangements, and methods of use are disclosed.

## Description

### BACKGROUND OF THE INVENTION

In order to achieve filtration performance targets, it may be necessary to use large and/or multiple filtration devices, or use filter devices that have to be replaced more often due to an increase in pressure drop resulting from insufficient filtration area. Either alternative can result in increased cost.

Thus, there is a need for improved filters. The present invention provides for ameliorating at least some of the disadvantages of the prior art. These and other advantages of the present invention will be apparent from the description as set forth below.

### BRIEF SUMMARY OF THE INVENTION

An aspect of the invention provides a filter arrangement comprising a plurality of filters in a radial arrangement, each filter comprising a plurality of filter arms, the plurality of filter arms comprising at least: a first filter arm comprising a first hollow tube having a porous side wall, the first hollow tube having an open first end and an open second end, and a first tube inner fluid channel having an inner diameter; and, a second filter arm comprising a second hollow tube having a porous side wall, the second hollow tube having an open first end and an open second end, and a second tube inner fluid channel having an inner diameter; each filter further comprising: a first tube connector, comprising a first hollow body having a porous side wall and first hollow body inner diameter, connected to, and in fluid communication with, the first and second hollow tubes, wherein the first hollow body inner diameter is greater than the tube inner fluid channel inner diameters; and, a second tube connector, comprising a second hollow body having a porous side wall and a second hollow body inner diameter, connected to, and in fluid communication with, the first hollow body, wherein the second hollow body inner diameter is greater than the first hollow body inner diameter.

In a preferred aspect of the filter arrangement, the plurality of filters are radially arranged between a central hollow hub and an outer cage, the central hollow hub including a central opening and a plurality of hub channels in fluid communication with the second hollow bodies, the outer cage including a plurality of retentate fluid flow ports in fluid communication with the first ends of the hollow tubes; and wherein spacing between the porous side walls of the hollow tubes provides permeate fluid flow paths.

Another aspect of the invention provides a filter arrangement comprising a plurality of curved filters in a radial arrangement, each filter comprising a plurality of curved filter arms, the plurality of curved filter arms comprising at least: a curved first filter arm comprising a curved first hollow tube having a porous side wall, the curved first hollow tube having an open first end and an open second end, and a curved first tube inner fluid channel having an inner diameter; and, a curved second filter arm comprising a curved second hollow tube having a porous side wall, the curved second hollow tube having an open first end and an open second end, and a curved second tube inner fluid channel having an inner diameter; each curved filter further comprising: a curved first tube connector, comprising a first hollow body having a porous side wall and first hollow body inner diameter, connected to, and in fluid communication with, the curved first and second hollow tubes, wherein the first hollow body inner diameter is greater than the tube inner fluid channel inner diameters; and, a curved second tube connector, comprising a second hollow body having a porous side wall and a second hollow body inner diameter, connected to, and in fluid communication with, the first hollow body, wherein the second hollow body inner diameter is greater than the first hollow body inner diameter.

In a preferred aspect of the filter arrangement, the plurality of curved filters are radially arranged between a central hollow hub and an outer cage, the central hollow hub including a central opening and a plurality of hub channels in fluid communication with the curved second hollow bodies, the outer cage including a plurality of retentate fluid flow ports in fluid communication with the first ends of the curved hollow tubes; and wherein spacing between the porous side walls of the curved hollow tubes provides permeate fluid flow paths.

In other aspects, filter devices, and methods of cross-flow filtration using the filter devices are provided, the filter devices each comprising filter housings having an inlet, a permeate outlet, and a retentate outlet, defining a permeate fluid flow path between the inlet and the permeate outlet, and a retentate fluid flow path between the inlet and the retentate outlet, with aspects of one or more filter arrangements arranged in the housings across the permeate fluid flow paths.

### BRIEF DESCRIPTION OF THE SEVERAL VIEWS OF THE DRAWING(S)

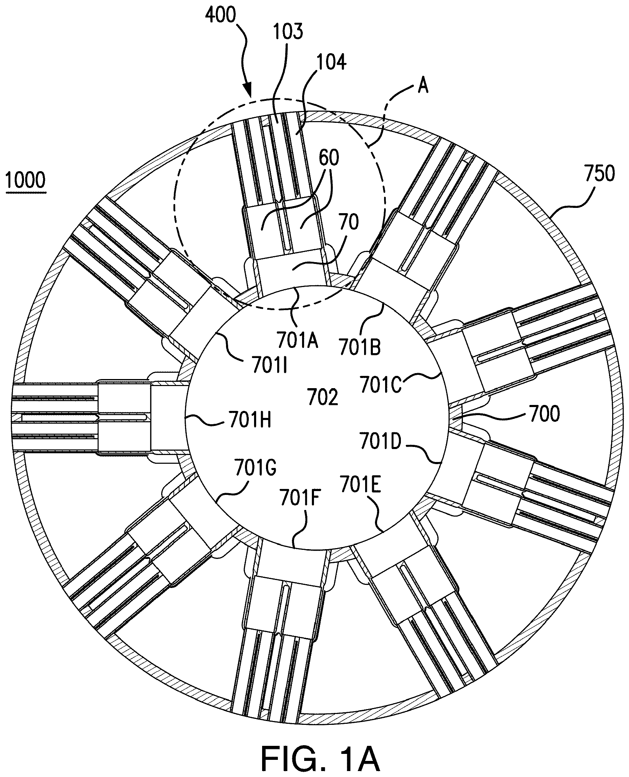

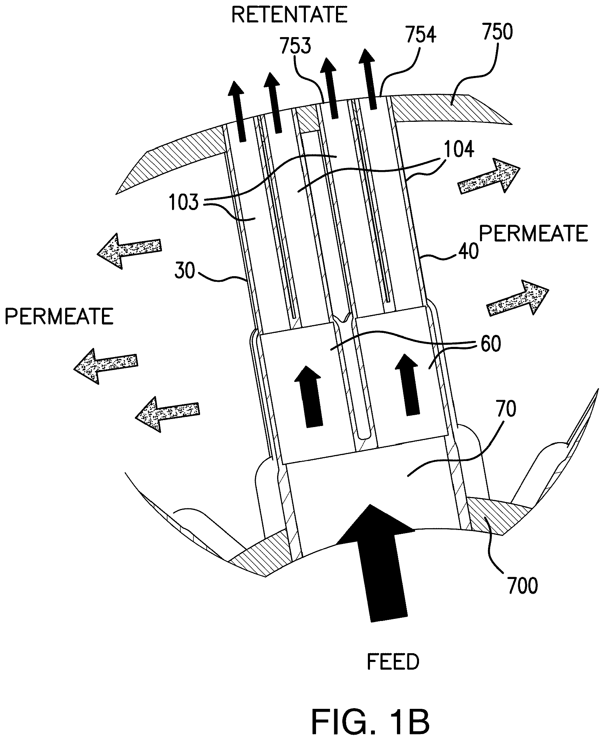

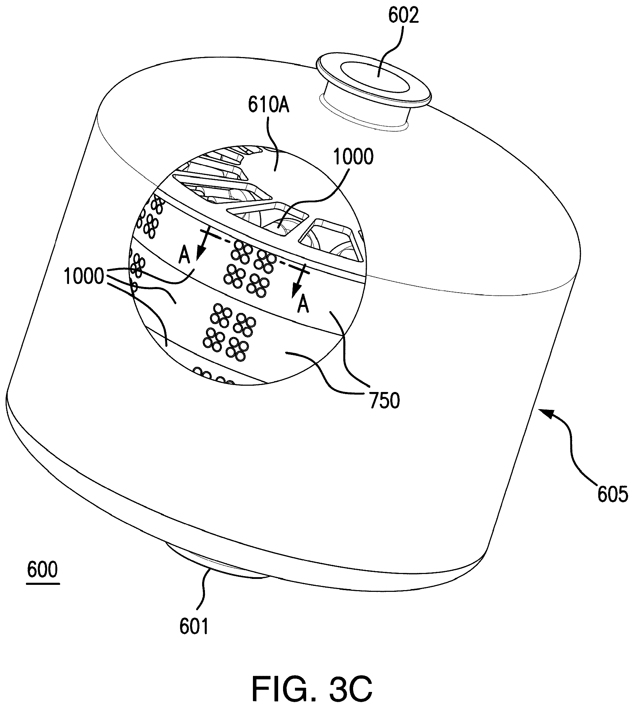

Figure 1A shows a filter arrangement comprising a plurality of filters in a radial arrangement providing cross-flow according to an aspect of the invention (taken along line A-A in Figure 3C), each filter comprising a plurality of filter arms, each arm comprising a hollow tube having a porous side wall and open ends; the filter further comprising a first tube connector having a porous side wall, connected to, and in fluid communication with, the hollow tubes, and a second tube connector connected to, and in fluid communication with, the first tube connector. Figure 1B shows an enlarged view of an individual filter as shown in detail A in the filter arrangement shown in Figure 1A, shown arranged between a central hollow hub and an outer cage, the central hollow hub including a central opening and a hub channel in fluid communication with a second hollow body of the filter, the outer cage including fluid flow ports in fluid communication with the first ends of the hollow tubes; and wherein spacing between the porous side walls of the curved hollow tubes provides permeate fluid flow paths.

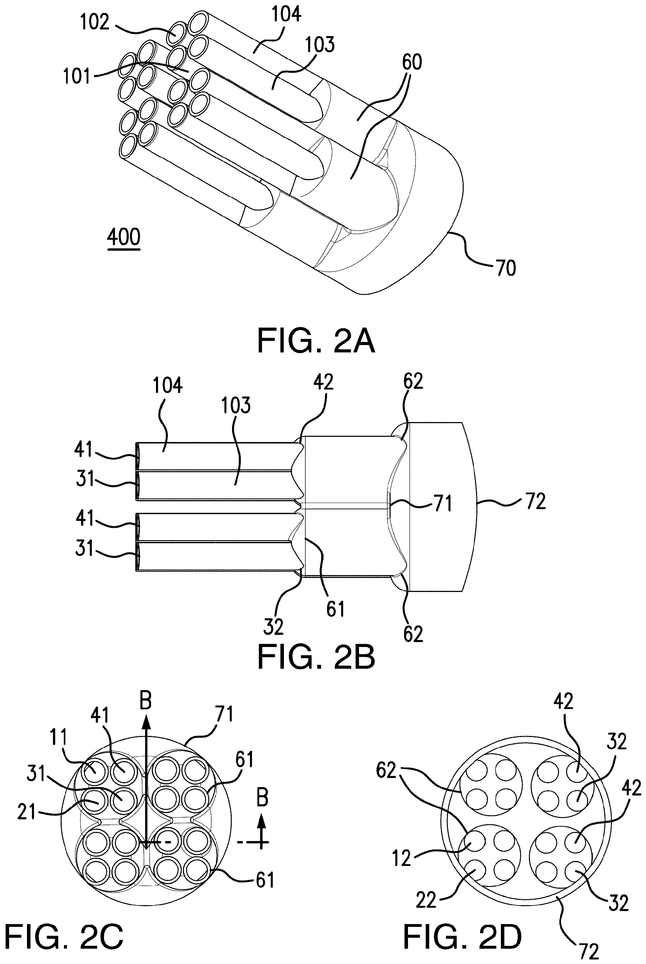

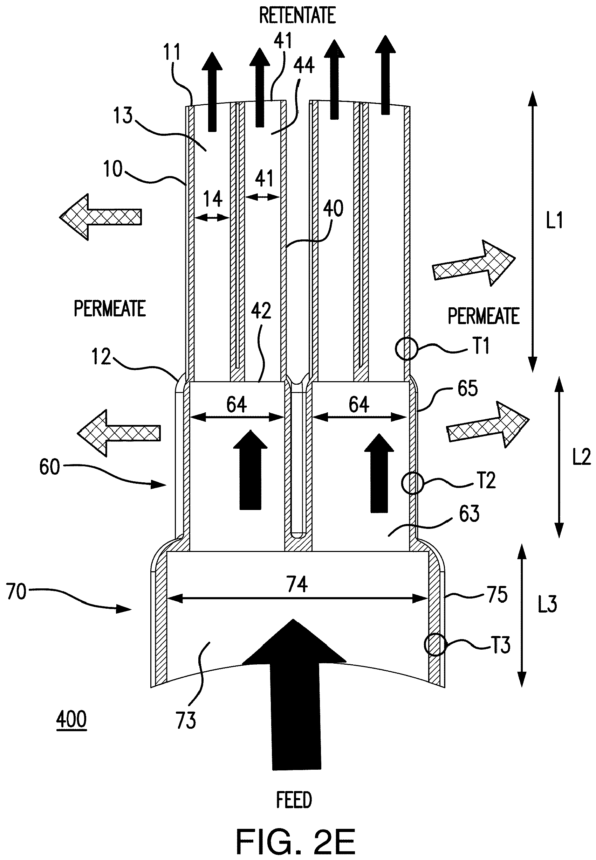

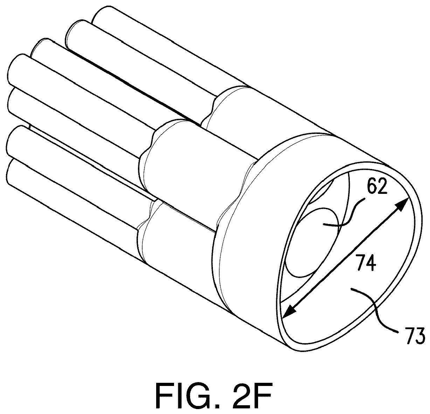

Figures 2A-2F show an individual filter comprising 4 sets of four filter arms in the filter arrangement shown in Figure 1A, each arm comprising a hollow tube having porous side walls and open ends; the filter further comprising first tube connectors having porous side walls, connected to, and in fluid communication with, the hollow tubes, and a second tube connector connected to, and in fluid communication with, the first tube connectors. Figure 2A shows an orthogonal view; Figure 2B shows a right side view; Figure 2C shows a top view; Figure 2D shows a bottom view, and Figure 2E shows a side cross-sectional view along line B-B of Figure 2C, also showing different lengths of the hollow tubes, first connectors, and the second connector, of the filter, as well as different thicknesses of the walls of the hollow tubes, first connectors, and the second connector.

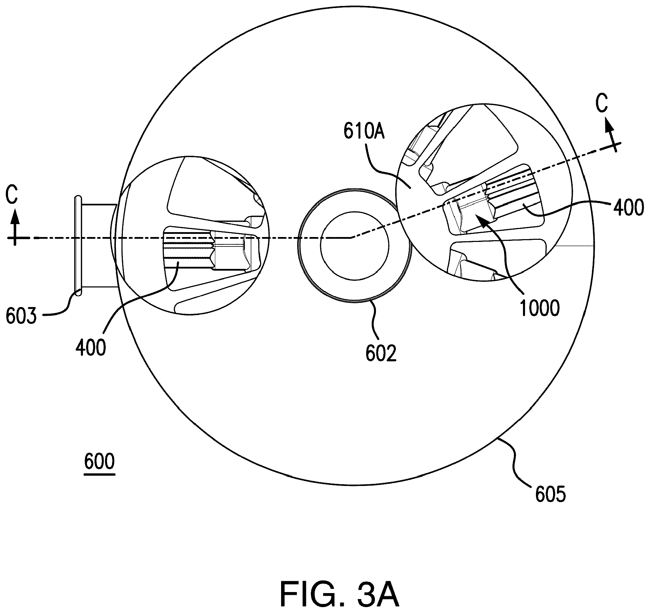

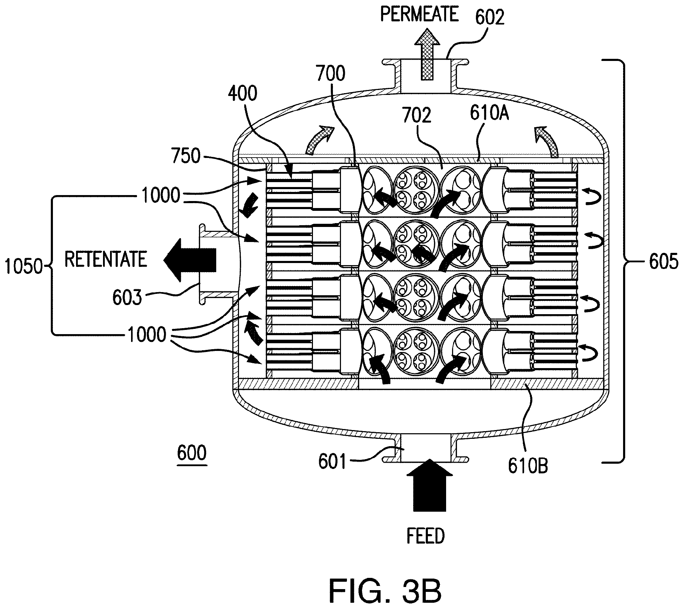

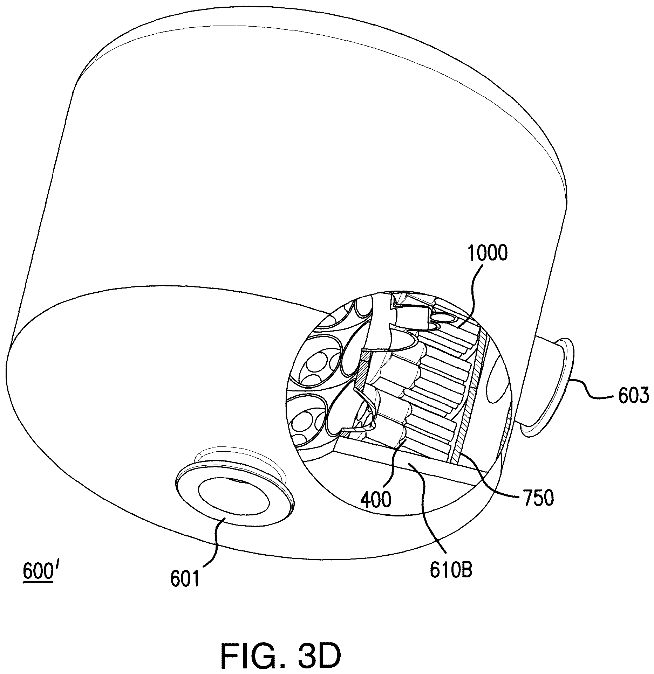

Figures 3A-3D show a filter device comprising a filter housing having an inlet, a permeate outlet, and a retentate outlet, defining a permeate fluid flow path between the inlet and the permeate outlet, and a retentate fluid flow path between the inlet and the retentate outlet, and a plurality of filter arrangements as shown in Figure 1A, arranged in the housing across the permeate fluid flow path. Figure 3A shows a top view with a partial cut-away; Figure 3B shows a cross-sectional side view along lines C-C of Figure 3A, with arrows showing the permeate and retentate fluid flow paths; Figure 3C shows an orthogonal partial cut-away view; and Figure 3D shows a bottom partial cut-away view.

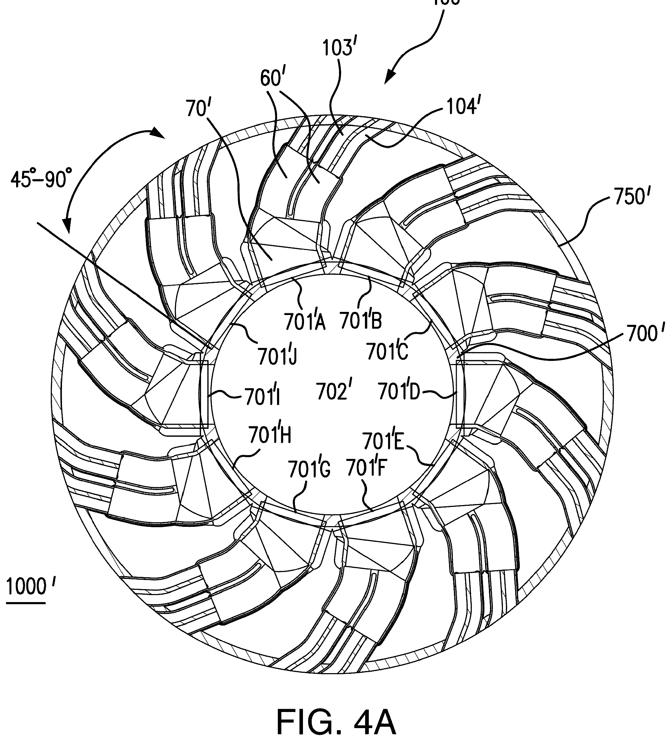

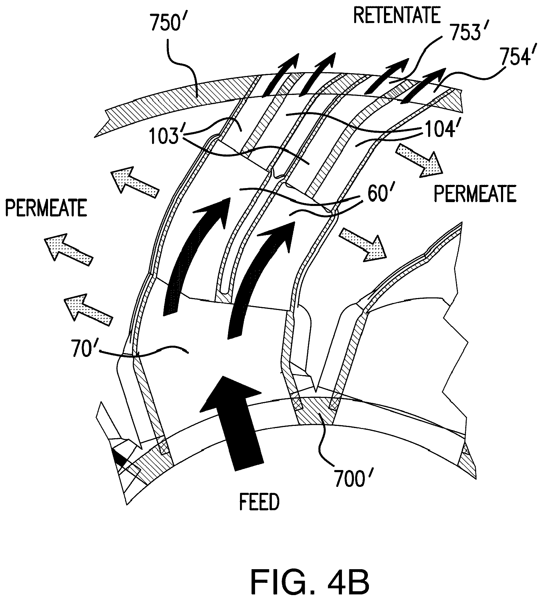

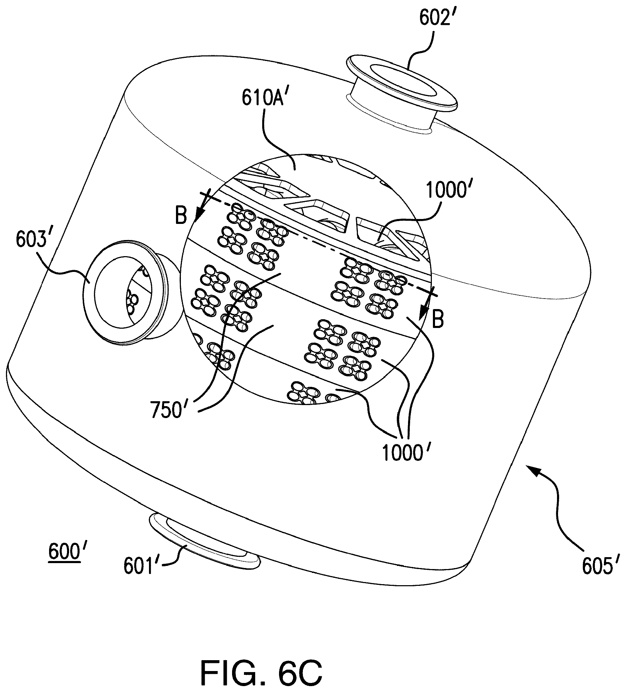

Figure 4A shows a filter arrangement comprising a plurality of curved filters in a radial arrangement providing cross-flow according to an aspect of the invention (taken along line B-B in Figure 6C), each curved filter comprising a plurality of filter arms, each arm comprising a curved hollow tube having a porous side wall and open ends; the filter further comprising a curved first tube connector having a porous side wall, connected to, and in fluid communication with, the hollow tubes, and a curved second tube connector connected to, and in fluid communication with, the first tube connector. Figure 4B shows an enlarged view of an individual curved filter as shown in the filter arrangement shown in Figure 4A, shown arranged between a central hollow hub and an outer cage, the central hollow hub including a central opening and a hub channel in fluid communication with a curved second hollow body of the curved filter, the outer cage including fluid flow ports in fluid communication with the first ends of the curved hollow tubes; and wherein spacing between the porous side walls of the curved hollow tubes provides permeate fluid flow paths.

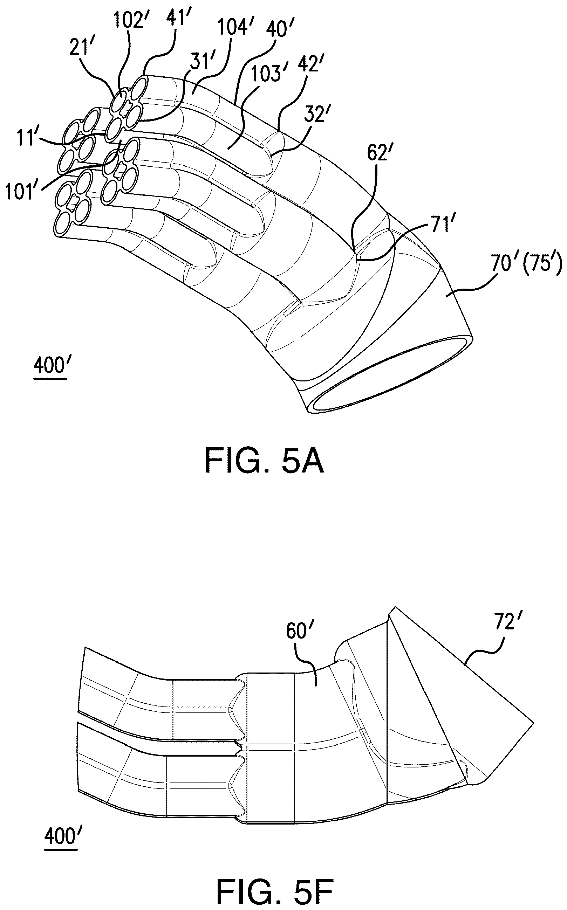

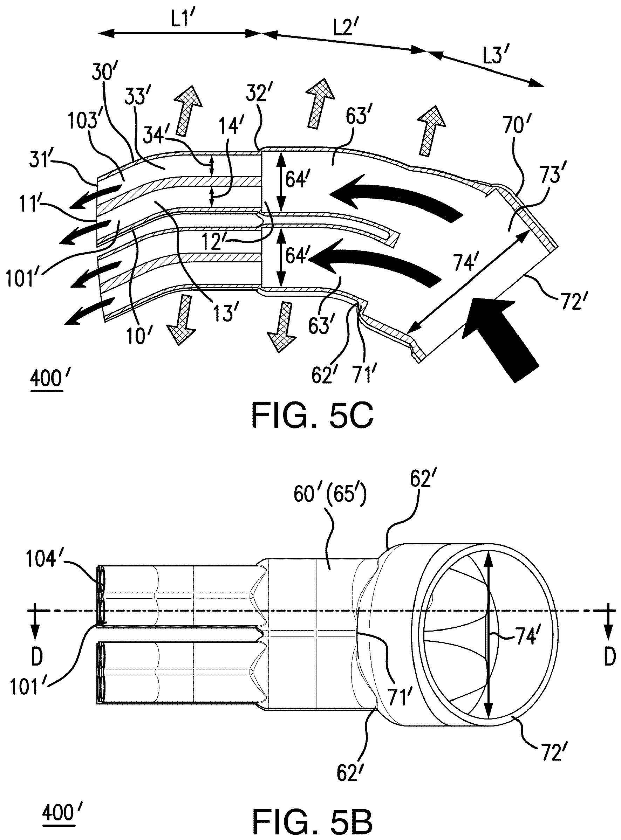

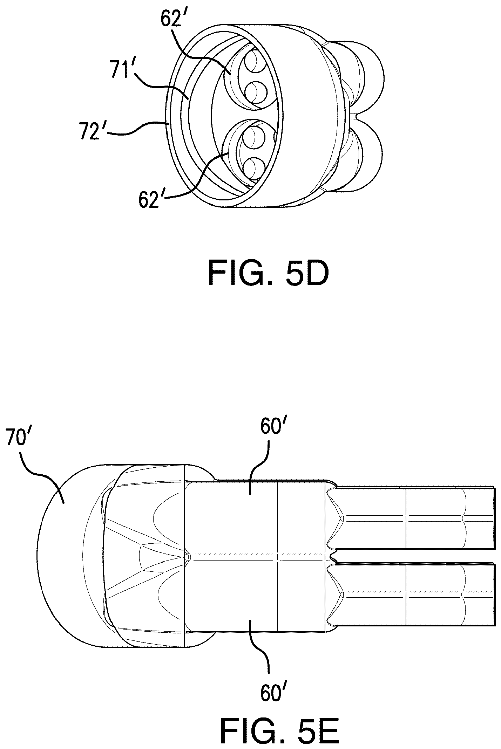

Figures 5A-5F show an individual curved filter comprising 4 sets of four filter arms in the filter arrangement shown in Figure 4A, each arm comprising a curved hollow tube having porous side walls and open ends; the filter further comprising curved first tube connectors having porous side walls, connected to, and in fluid communication with, the curved hollow tubes, and a curved second tube connector connected to, and in fluid communication with, the curved first tube connectors. Figure 5A shows an orthogonal view; Figure 5B shows a perspective side view; Figure 5C shows a right side cross-sectional view along line D-D of Figure 5B, also showing different lengths of the hollow tubes, first connectors, and the second connector, of the filter, as well as differ; Figure 5D shows a bottom view, and Figure 5E shows a top view; and Figure 5F shows a left side view.

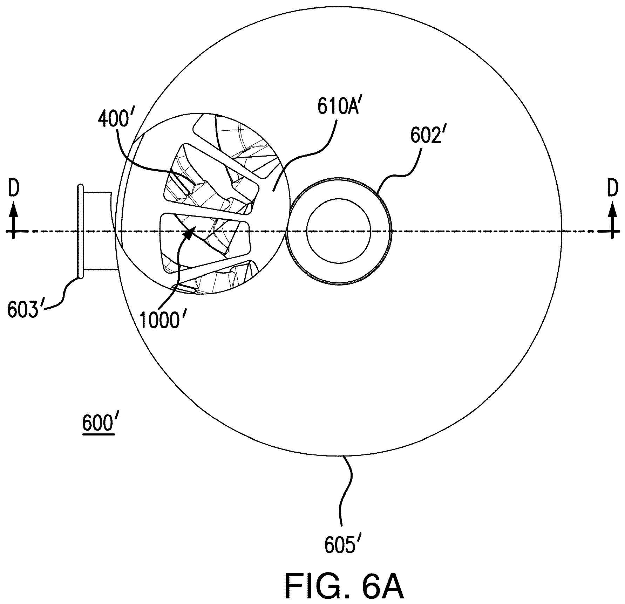

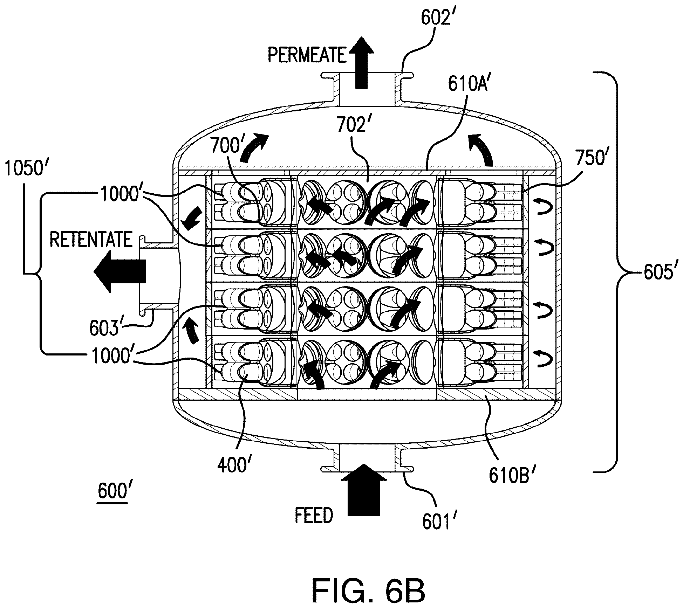

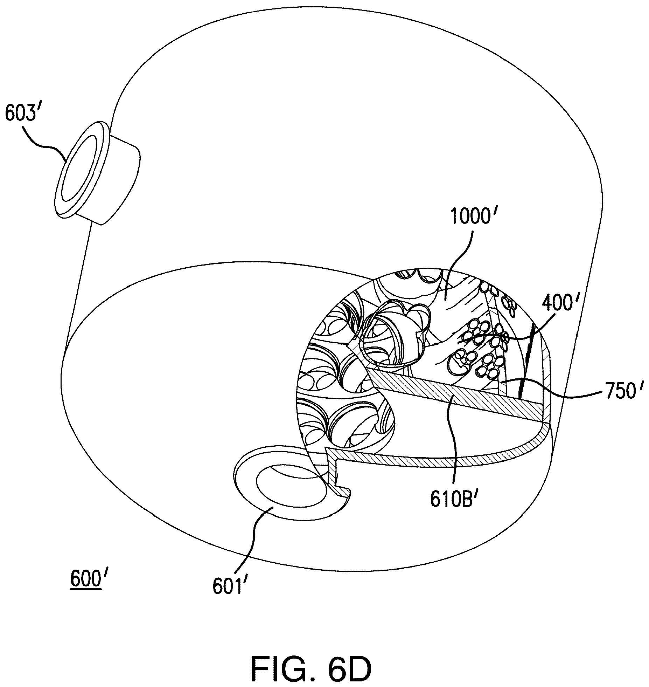

Figures 6A-6D show a filter device comprising a filter housing having an inlet, a permeate outlet, and a retentate outlet, defining a permeate fluid flow path between the inlet and the permeate outlet, and a retentate fluid flow path between the inlet and the retentate outlet, and a plurality of filter arrangements as shown in Figure 4A, arranged in the housing across the permeate fluid flow path. Figure 6A shows a top view with a partial cut-away; Figure 6B shows a cross-sectional side view along line D-D of Figure 6A, with arrows showing the permeate and retentate fluid flow paths; Figure 6C shows an orthogonal partial cut-away view; and Figure 6D shows a bottom partial cut-away view.

### DETAILED DESCRIPTION OF THE INVENTION

An aspect of the invention provides a filter arrangement comprising a plurality of filters in a radial arrangement, each filter comprising a plurality of filter arms, the plurality of filter arms comprising at least: a first filter arm comprising a first hollow tube having a porous side wall, the first hollow tube having an open first end and an open second end, and a first tube inner fluid channel having an inner diameter; and, a second filter arm comprising a second hollow tube having a porous side wall, the second hollow tube having an open first end and an open second end, and a second tube inner fluid channel having an inner diameter; each filter further comprising: a first tube connector, comprising a first hollow body having a porous side wall and first hollow body inner diameter, connected to, and in fluid communication with, the first and second hollow tubes, wherein the first hollow body inner diameter is greater than the tube inner fluid channel inner diameters; and, a second tube connector, comprising a second hollow body having a porous side wall and a second hollow body inner diameter, connected to, and in fluid communication with, the first hollow body, wherein the second hollow body inner diameter is greater than the first hollow body inner diameter.

In a preferred aspect of the filter arrangement, the plurality of filters are radially arranged between a central hollow hub and an outer cage, the central hollow hub including a central opening and a plurality of hub channels in fluid communication with the second hollow bodies, the outer cage including a plurality of retentate fluid flow ports in fluid communication with the first ends of the hollow tubes; and wherein spacing between the porous side walls of the hollow tubes provides permeate fluid flow paths.

Another aspect of the invention provides a filter arrangement comprising a plurality of curved filters in a radial arrangement, each filter comprising a plurality of curved filter arms, the plurality of curved filter arms comprising at least: a curved first filter arm comprising a curved first hollow tube having a porous side wall, the curved first hollow tube having an open first end and an open second end, and a curved first tube inner fluid channel having an inner diameter; and, a curved second filter arm comprising a curved second hollow tube having a porous side wall, the curved second hollow tube having an open first end and an open second end, and a curved second tube inner fluid channel having an inner diameter; each curved filter further comprising: a curved first tube connector, comprising a first hollow body having a porous side wall and first hollow body inner diameter, connected to, and in fluid communication with, the curved first and second hollow tubes, wherein the first hollow body inner diameter is greater than the tube inner fluid channel inner diameters; and, a curved second tube connector, comprising a second hollow body having a porous side wall and a second hollow body inner diameter, connected to, and in fluid communication with, the first hollow body, wherein the second hollow body inner diameter is greater than the first hollow body inner diameter.

Aspects of the filters in the filter arrangements can include filter arms including any number of hollow tubes (including straight hollow tubes, or curved hollow tubes), and, if desired, any number of first tube connectors and second tube connectors (including straight, or curved, first and second tube connectors).

Aspects of filters in the filter arrangements can have any number of sets of a plurality of filter arms, and each set can communicate with a separate first tube connector, and a plurality of separate first tube connectors can communicate with a common second tube connector.

In a preferred aspect of the filter arrangement, the plurality of curved filters are radially arranged between a central hollow hub and an outer cage, the central hollow hub including a central opening and a plurality of hub channels in fluid communication with the curved second hollow bodies, the outer cage including a plurality of retentate fluid flow ports in fluid communication with the first ends of the curved hollow tubes; and wherein spacing between the porous side walls of the curved hollow tubes provides permeate fluid flow paths.

In other aspects, filter devices, and methods of cross-flow filtration using the filter devices are provided, the filter devices each comprising filter housings having an inlet, a permeate outlet, and a retentate outlet, defining a permeate fluid flow path between the inlet and the permeate outlet, and a retentate fluid flow path between the inlet and the retentate outlet, with aspects of one or more filter arrangements (preferably, two or more filter arrangements) arranged in the housings across the permeate fluid flow paths.

Each of the components of the invention will now be described in more detail below, wherein like components have like reference numbers. The illustrated aspects of filter devices are arranged for inside-out filter flow.

Figure 1A shows an aspect of a filter arrangement 1000 comprising a plurality of cross-flow filters 400 in a radial arrangement, each filter (discussed as shown in more detail in Figures 1B and 2A-2E) comprising sets of pluralities of four filter arms, each filter arm comprising a hollow tube having a porous wall, wherein the arm is open at each end, each filter further comprising a first tube connector comprising a first hollow body having a porous wall wherein the first tube connector is connected to, and in fluid communication with, the hollow tubes, and, a second tube connector, comprising a second hollow body having a porous wall, connected to, and in fluid communication with, the first hollow body. The plurality of filters (nine filters are shown, filter arrangements can have any number of filters) are radially arranged around a central axis between a central hollow hub 700 and an outer cage 750, the central hollow hub 700 including a central opening 702 and a plurality of hub channels 701A-700I in fluid communication with the second hollow bodies and the central opening 702 of the central hollow hub, the outer cage 750 including a plurality of retentate fluid flow ports for the hollow tubes, illustrated in Figure 1B as 753 (for hollow tube 103), and 754 (for hollow tube 104) in fluid communication with the first ends of the hollow tubes; and wherein spacing between the porous side walls of the hollow tubes provides permeate fluid flow paths.

As illustrated in Figures 2A-2E, a filter 400 comprises 4 sets of 4 filter arms (filters can have any number of filter arms and/or sets of filter arms), each set comprising a first filter arm 101 comprising a first hollow tube 10 having a porous side wall, an open first end 11, an open second end 12, a first hollow tube inner fluid channel 13 having an inner diameter 14; a second filter arm 102 comprising a second hollow tube 20 having a porous side wall, an open first end 21, an open second end 22, a second hollow tube inner fluid channel 23 having an inner diameter 24; a third filter arm 103 comprising a third hollow tube 30 having a porous side wall, an open first end 31, an open second end 32, a third hollow tube inner fluid channel 33 having an inner diameter 34; and a fourth filter arm 104 comprising a fourth hollow tube 40 having a porous side wall, an open first end 41, an open second end 42, a fourth hollow tube inner fluid channel 43 having an inner diameter 44; and the filter further comprises, communicating with each set of 4 filter arms, a separate first tube connector 60, comprising a first hollow body 65 having a porous side wall, having an open first end 61, and an open second end 62, a first hollow body inner fluid channel 63 having a first hollow body inner diameter 64, wherein the first tube connector is connected to, and in fluid communication with, the open second ends 12, 22, 32, 42 of the first, second, third, and fourth hollow tubes 10, 20, 30, 40 wherein the first hollow body inner diameter 64 is greater than each of the tube inner fluid channel inner diameters 14, 24, 34, and 44, wherein the filter 400 further comprises, commonly communicating with each of the 4 first tube connectors, a second tube connector 70, comprising a second hollow body 75, having an open first end 71, and an open second end 72 (the second tube connector having a total length L3A as illustrated in Figure 2E), a second hollow body inner fluid channel 73 having a second hollow body inner diameter 74, wherein the open first end 71 of the second tube connector 70 is connected to, and in fluid communication with, the open second ends 62 of the first hollow bodies 65, wherein the second hollow body inner diameter 74 is greater than the first hollow body inner diameters 64, and the first hollow body inner diameter 64 is greater than each of the tube inner fluid channel inner diameters 14, 24, 34, and 44. In the illustration of Figure 2E, all of the sets of 4 filter arms have the same length L1A, the first connectors have a length L2A, and the second connector has a length L3A wherein L1A>L2A>L3A.

The relationships between the lengths of the filter arms, first connectors, and second connectors, are not limited to those as illustrated, the various lengths can be all equal, or two can be equal, or, for example, L1A<L2A>L3A, etc. Additionally, or alternatively, in those aspects including a plurality of filters, the relationships between the lengths of the filter arms, first connectors, and second connectors, can be different for different filters in the same filter device.

Typically, as illustrated in Figure 2E, there are different thicknesses of the walls of the hollow tubes, first connectors, and the second connector, wherein the walls of the hollow tubes (T1) are thinner than the walls of the first tube connector (T2), and the walls of the first tube connector are thinner than the walls of the second tube connector (T3).

Figure 4A shows an aspect of a filter arrangement 1000' comprising a plurality of curved cross-flow filters 400' in a radial arrangement, each curved filter (discussed as shown in more detail in Figures 4B and 5A-5F) comprising sets of pluralities of four curved filter arms (filters can have any number of filter arms), each curved filter arm comprising a curved hollow tube having a porous wall, wherein the curved arm is open at each end, each curved filter further comprising a curved first tube connector comprising a curved first hollow body having a porous wall wherein the curved first tube connector is connected to, and in fluid communication with, the curved hollow tubes, and, a curved second tube connector, comprising a curved second hollow body having a porous wall, connected to, and in fluid communication with, the curved first hollow body. The plurality of filters (ten filters are shown, filter arrangements can have any number of filters) are radially arranged around a central axis between a central hollow hub 700' and an outer cage 750', the central hollow hub 700' including a central opening 702' and a plurality of hub channels 701A'-700J' in fluid communication with the curved second hollow bodies and the central opening 702' of the central hollow hub, the outer cage 750' including a plurality of retentate fluid flow ports illustrated in Figure 4B as 753' (for hollow tube 103'), and 754' (for hollow tube 104') in fluid communication with the first ends of the curved hollow tubes; and wherein spacing between the porous side walls of the curved hollow tubes provides permeate fluid flow paths.

In some aspects, curved filters can provide more filter area with the same outside diameter than straight filters. In the aspect illustrated in Figure 4A, the overall angle of the curved filter 400' with respect to the side of the central hollow hub 700' including hub channels is in the range of about 45° to about 90°, but a variety of angles are suitable for use in the invention.

As illustrated in Figures 5A-5F, a curved filter 400' comprises 4 sets of 4 curved filter arms (filters can have any number of curved filter arms and/or sets of curved filter arms), each set comprising a curved first filter arm 101' comprising a curved first hollow tube 10' having a porous side wall, an open first end 11', an open second end 12', a curved first hollow tube inner fluid channel 13' having an inner diameter 14'; a curved second filter arm 102' comprising a curved second hollow tube 20' having a porous side wall, an open first end 21', an open second end 22', a curved second hollow tube inner fluid channel 23' having an inner diameter 24'; a curved third filter arm 103' comprising a curved third hollow tube 30' having a porous side wall, an open first end 31', an open second end 32', a curved third hollow tube inner fluid channel 33' having an inner diameter 34'; and a curved fourth filter arm 104' comprising a curved fourth hollow tube 40' having a porous side wall, an open first end 41', an open second end 42', a curved fourth hollow tube inner fluid channel 43' having an inner diameter 44'; and the curved filter further comprises, communicating with each set of 4 curved filter arms, a separate curved first tube connector 60', comprising a first hollow body 65' having a porous side wall, having an open first end 61', and an open second end 62', a curved first hollow body inner fluid channel 63' having a curved first hollow body inner diameter 64', wherein the curved first tube connector is connected to, and in fluid communication with, the open second ends 12', 22', 32', 42' of the curved first, second, third, and fourth hollow tubes 10', 20', 30', 40' wherein the curved first hollow body inner diameter 64' is greater than each of the curved tube inner fluid channel inner diameters 14', 24', 34', and 44', wherein the curved filter 400' further comprises, commonly communicating with each of the 4 curved first tube connectors, a curved second tube connector 70', comprising a curved second hollow body 75', having an open first end 71', and an open second end 72' (the curved second tube connector having a total length L3' as illustrated in Figure 5C), a curved second hollow body inner fluid channel 73' having a curved second hollow body inner diameter 74', wherein the open first end 71' of the curved second tube connector 70' is connected to, and in fluid communication with, the open second ends 62' of the curved first hollow bodies 65', wherein the curved second hollow body inner diameter 74' is greater than the curved first hollow body inner diameters 64', and the curved first hollow body inner diameter 64' is greater than each of the curved tube inner fluid channel inner diameters 14', 24', 34', and 44'. In the illustration of Figure 5C, all of the sets of 4 curved filter arms have the same length L1', the first connectors have a length L2', and the second connector has a length L3' wherein L1'>L2'>L3'.

Similar to the discussion with respect to, for example, the aspect illustrated in Figures 2A-2E, the relationships between the lengths of the curved filter arms, curved first connectors, and curved second connectors, are not limited to those as illustrated, the various lengths can be all equal, or two can be equal, or, for example, L1'<L2'>L3', etc. Additionally, or alternatively, in those aspects including a plurality of filters, the relationships between the lengths of the filter arms, first connectors, and second connectors, can be different for different filters in the same filter device.

One or more aspects of filter arrangements are typically disposed in a housing comprising an inlet, a permeate outlet, and a retentate outlet, defining a permeate fluid flow path between the inlet and the permeate outlet, and a retentate fluid flow path between the inlet and the retentate outlet, with aspects of one or more filter arrangements arranged in the housing across the permeate fluid flow path.

Figures 3A-3D show a filter device 600 according to another aspect of the invention, the filter device comprising a housing 605 having an inlet 601, a permeate outlet 602, and a retentate outlet 603 and defining a permeate fluid flow path between the inlet and the permeate outlet, and a retentate fluid flow path between the inlet and the retentate outlet, with a plurality of filter arrangements 1000 (4 arrangements are shown, collectively providing a filter arrangement insert 1050; filter devices can have any number of filter arrangements) according to an aspect of the invention as shown in Figure 1A arranged in the housing across the permeate fluid flow path. The filter arrangement insert 1050 is mounted in the housing 605 between barrier plates 610A and 610B. As shown in more detail in Figure 3B, the illustrated aspect of the filter device is arranged for "inside-out" filtration flow.

Figures 6A-6D show a filter device 600' according to another aspect of the invention, the filter device comprising a housing 605' having an inlet 601', a permeate outlet 602', and a retentate outlet 603' and defining a permeate fluid flow path between the inlet and the permeate outlet, and a retentate fluid flow path between the inlet and the retentate outlet, with a plurality of filter arrangements 1000' (4 arrangements are shown, collectively providing a filter arrangement insert 1050'; filter devices can have any number of filter arrangements) according to an aspect of the invention as shown in Figure 4A arranged in the housing across the permeate fluid flow path. The filter arrangement insert 1050' is mounted in the housing 605' between barrier plates 610' and 610B'. As shown in more detail in Figure 6B, the illustrated aspect of the filter device is arranged for "inside-out" filtration flow.

If desired, aspects of the invention can be utilized in closed and sterile systems. As used herein, the term "closed" refers to a system that allows the collection and processing (including filtration, and, if desired, the manipulation, e.g., separation of portions, separation into components, storage, and preservation) of fluid, without exposing the contents of the system to the environment in which it is being used. A closed system can be as originally made, or result from the connection of system components of sanitary fittings including sterile docking devices.

The side walls of the hollow tubes and the first tube connectors (and in some aspects, the second tube connectors) can have any suitable pore structure, e.g., a pore size (for example, as evidenced by bubble point, or by K_{L} as described in, for example, U.S. Patent 4,340,479, or evidenced by capillary condensation flow porometry), a mean flow pore (MFP) size (e.g., when characterized using a porometer, for example, a Porvair Porometer (Porvair plc, Norfolk, UK), or a porometer available under the trademark POROLUX (Porometer.com; Belgium)), a pore rating, a pore diameter (e.g., when characterized using the modified OSU F2 test as described in, for example, U.S. Patent 4,925,572), or removal rating media. The pore structure used depends on the size of the particles to be utilized, the composition of the fluid to be treated, and the desired effluent level of the treated fluid. In those aspects wherein the walls of the first and/or second tube connectors are porous (e.g., in some aspects wherein the hollow tubes and tube connectors are made from the same material), the pore structure of the tube connector walls is no greater than the pore structure of the walls of the hollow tubes.

A filter can have any desired critical wetting surface tension (CWST, as defined in, for example, U.S. Patent 4,925,572). The CWST can be selected as is known in the art, e.g., as additionally disclosed in, for example, U.S. Patents 5,152,905, 5,443,743, 5,472,621, and 6,074,869. Typically, the filter element has a CWST of at least about 17 dynes/cm (about 17 x 10⁻⁵ N/cm), for example, a CWST in the range of from about 17 dynes/cm to about 90 dynes/cm (about 17 x 10⁻⁵ N/cm to about 90 x 10⁻⁵ N/cm), more typically in the range of about 50 dynes/cm to about 60 dynes/cm (about 50 x 10⁻⁵ N/cm to about 60 x 10⁻⁵ N/cm).

The surface characteristics of a filter can be modified (e.g., to affect the CWST, to include a surface charge, e.g., a positive or negative charge, and/or to alter the polarity or hydrophilicity of the surface) by wet or dry oxidation, by coating or depositing a polymer on the surface, or by a grafting reaction.

Any aspects of the filters and/or filter arrangements can include additional elements, layers, or components, that can have different structures and/or functions, e.g., at least one of any one or more of the following: prefiltration, support, drainage, spacing and cushioning. Illustratively, the filter can also include at least one additional element such as a mesh and/or a screen.

In accordance with aspects of the invention, filters and filter arrangements can have a variety of configurations, including planar, pleated, and hollow cylindrical.

Filters, and filter arrangements (including filter arms and tube connectors) and housings according to aspects of the invention are preferably monolithic, and preferably manufactured via additive manufacturing (sometimes referred to as "additive layer manufacturing" or "3D printing"). They are typically formed by repeated depositions of a metal powder bound together with an activatable binder (e.g., binder jetting, sometimes referred to as "drop on powder"), typically followed by agglomerating the powder, e.g., by sintering. Other suitable methods include extrusion (e.g., paste extrusion, fused filament fabrication and fused deposition modelling) and light polymerization (e.g., stereolithography apparatus (SLA), and digital light processing (DLP)).

Filters, filter arms, and filter arrangements and housings can be manufactured together via additive manufacturing in a continuous operation at substantially the same time.

Any suitable additive manufacturing equipment can be used, and a variety of production 3D printers are suitable and commercially available.

All references, including publications, patent applications, and patents, cited herein are hereby incorporated by reference to the same extent as if each reference were individually and specifically indicated to be incorporated by reference and were set forth in its entirety herein.

The use of the terms "a" and "an" and "the" and "at least one" and similar referents in the context of describing the invention (especially in the context of the following claims) are to be construed to cover both the singular and the plural, unless otherwise indicated herein or clearly contradicted by context. The use of the term "at least one" followed by a list of one or more items (for example, "at least one of A and B") is to be construed to mean one item selected from the listed items (A or B) or any combination of two or more of the listed items (A and B), unless otherwise indicated herein or clearly contradicted by context. The terms "comprising," "having," "including," and "containing" are to be construed as open-ended terms (i.e., meaning "including, but not limited to,") unless otherwise noted. Recitation of ranges of values herein are merely intended to serve as a shorthand method of referring individually to each separate value falling within the range, unless otherwise indicated herein, and each separate value is incorporated into the specification as if it were individually recited herein. All methods described herein can be performed in any suitable order unless otherwise indicated herein or otherwise clearly contradicted by context. The use of any and all examples, or exemplary language (e.g., "such as") provided herein, is intended merely to better illuminate the invention and does not pose a limitation on the scope of the invention unless otherwise claimed. No language in the specification should be construed as indicating any non-claimed element as essential to the practice of the invention.

Preferred aspects of this invention are described herein, including the best mode known to the inventors for carrying out the invention. Variations of those preferred aspects may become apparent to those of ordinary skill in the art upon reading the foregoing description. The inventors expect skilled artisans to employ such variations as appropriate, and the inventors intend for the invention to be practiced otherwise than as specifically described herein. Accordingly, this invention includes all modifications and equivalents of the subject matter recited in the claims appended hereto as permitted by applicable law. Moreover, any combination of the above-described elements in all possible variations thereof is encompassed by the invention unless otherwise indicated herein or otherwise clearly contradicted by context.

## Claims

1. A filter arrangement comprising a plurality of filters in a radial arrangement, each of the plurality of filters comprising a plurality of filter arms, the plurality of filter arms comprising at least:
a first filter arm comprising a first hollow tube having porous side walls, the first hollow tube having an open first end and an open second end, and a first tube inner fluid channel having an inner diameter; and,
a second filter arm comprising a second hollow tube having porous side walls, the second hollow tube having an open first end and an open second end, and a second tube inner fluid channel having an inner diameter;
each of the filters further comprising:
a first tube connector, comprising a first hollow body having porous side walls and a first hollow body inner diameter, connected to, and in fluid communication with, the first and second hollow tubes, wherein the first hollow body inner diameter is greater than the first and second tube inner fluid channel inner diameters;
and,
a second tube connector, comprising a second hollow body having a second hollow body inner diameter, connected to, and in fluid communication with, the first hollow body, wherein the second hollow body inner diameter is greater than the first hollow body inner diameter.

2. A filter arrangement comprising a plurality of curved filters in a radial arrangement, each of the plurality of curved filters comprising a plurality of curved filter arms, the plurality of curved filter arms comprising at least:
a curved first filter arm comprising a curved first hollow tube having porous side walls, the curved first hollow tube having an open first end and an open second end, and a curved first tube inner fluid channel having an inner diameter; and,
a curved second filter arm comprising a curved second hollow tube having porous side walls, the curved second hollow tube having an open first end and an open second end, and a curved second tube inner fluid channel having an inner diameter;
each of the curved filters further comprising:
a curved first tube connector, comprising a curved first hollow body having porous side walls and a first hollow body inner diameter, connected to, and in fluid communication with, the curved first and second hollow tubes, wherein the curved first hollow body inner diameter is greater than the curved first and second tube inner fluid channel inner diameters;
and,
a curved second tube connector, comprising a curved second hollow body having a second hollow body inner diameter, connected to, and in fluid communication with, the curved first hollow body, wherein the second hollow body inner diameter is greater than the first hollow body inner diameter.

3. The filter arrangement of claim 1 or 2 wherein the plurality of filters or the plurality of curved filters are radially arranged between a central hollow hub and an outer cage, the central hollow hub including a central opening and a plurality of hub channels in fluid communication with the second hollow bodies or curved second hollow bodies, the outer cage including a plurality of retentate fluid flow ports in fluid communication with the first ends of the hollow tubes or the curved hollow tubes; and wherein spacing between the porous side walls of the hollow tubes or curved hollow tubes provides permeate fluid flow paths.

4. A filter device comprising a filter housing having an inlet, a permeate outlet, and a retentate outlet, defining a permeate fluid flow path between the inlet and the permeate outlet, and a retentate fluid flow path between the inlet and the retentate outlet, and at least one filter arrangement of any one of claims 1-3, arranged in the housing across the permeate fluid flow path.

5. The filter device of claim 4, including at least two filter arrangements of any one of claims 1-3, arranged in the housing across the permeate fluid flow path.

6. A method filtering a fluid, comprising passing the fluid through the filter arrangement of any one of claims 1-3 or the filter device of claim 4 or 5.
